# EUROPEAN PATENT APPLICATION

(11) **EP 3 364 347 A1**
(43) Date of publication of application: **22.08.2018**
(21) Application number: 18157197.7
(22) Date of filing: 16.02.2018
(51) Int. Cl.: G06Q 10/00

(54) **METHOD AND SYSTEM FOR GUARANTEEING A SALES TRANSACTION OF A PRODUCT SOLD ONLINE**

(30) Priority: 16.02.2017 IT 201700017353
(71) Applicant: Safepay Italia S.r.l., 25124 Brescia (IT)
(72) Inventor: BELARDO, Dimitri, I-25124 Brescia (IT)
(74) Representative: Chimini, Francesco

(57) **Abstract**

A method for guaranteeing a sales transaction of a product sold online, wherein:
a) the buyer registers on the website of an intermediary appointed to guarantee the sales transaction;
b) the seller registers on the website of the intermediary;
c) the buyer enters data identifying the product to be purchased on the website of the intermediary;
d) the buyer makes the payment for the product to a bank account managed by the intermediary;
e) the intermediary, once the amount paid by the buyer has been credited, sends a payment certificate to the seller;
f) the product is transferred from the seller to the intermediary;
g) the product undergoes a warranty procedure;
h) the product is transferred from the intermediary to the buyer;
i) if there are no objections within a predetermined period of time, the intermediary pays the seller for the product.

## Description

The present invention concerns a method and a system for guaranteeing a sales transaction of a product sold online.

Sales transactions of products completed online, i.e., using websites, are increasingly common. Not only new products but also used products are sold. Among the used products sold online, technological items, such as smartphones, computers, cameras, etc., are also very common.

Especially in the case of used products, and in particular in the case of electronic products, a problem often experienced by the buyer is of course not being certain that the product is in good condition and corresponds to what was stated by the seller on the online sales website.

It has been found that the seller runs the risk of being defrauded as well. For example, the buyer buys an intact item, replaces a component of interest with a faulty component and returns the item, complaining that the item is defective.

The need to guarantee a correct sales transaction of items sold online to protect both the buyer and the seller is therefore strongly felt.

The object of the present invention is to satisfy such a need by proposing a method for guaranteeing a sales transaction of products sold online.

Said object is achieved with a method according to claim 1 and with a system according to claim 11.

The dependent claims describe preferred embodiments of the invention.

In accordance with a general embodiment, the method to guarantee a sales transaction of a product sold online provides for the involvement of an intermediary party (hereinafter also referred to simply as "intermediary") tasked with guaranteeing the sales transaction.

Initially, both the buyer and the seller are registered on the intermediary's website.

The buyer enters data identifying the product to be purchased on the intermediary's website. For example, such data are provided by the same seller to describe the product.

The buyer makes the payment for the product to a bank account managed by the intermediary.

The intermediary, once the amount paid by the buyer has been credited, sends a payment certificate to the seller.

The product is then transferred from the seller to the intermediary, for example through a courier.

The product is subjected to a warranty procedure which includes at least the following steps:
- physically inspecting the product by a technician tasked with ensuring that the product corresponds to the data provided by the buyer;
- weighing the product without packaging;
- affixing at least one warranty seal to the product.

In particular, the warranty seal is placed in a position such that tampering with the product causes irreversible damage to the warranty seal.

The number of warranty seals is commensurate with the type of goods subject to inspection and, in particular, with the vulnerable parts of the product.

It should be emphasized that the integrity of the warranty seal is fundamental, especially in the step of returning the product and in liability related to the failure or partial failure of the goods.

In one embodiment, the warranty procedure is filmed using a closed-circuit camera system.

If the product is in conformity, it is transferred from the intermediary to the buyer.

If there are no objections within a predetermined period of time, the intermediary pays the seller for the product.

Therefore, the seller is protected, as the intermediary undertakes the verifications necessary to ensure that the product sold actually corresponds to that which was declared by the seller. Moreover, the seller is also left with the possibility of verifying the conformity of the product delivered and of lodging any complaints before the amount paid is paid out to the seller.

The seller is protected from any attempts at fraud by the buyer, as the intermediary is responsible for affixing to the product one or more warranty seals that prevent the buyer from tampering with the product. Moreover, weighing the product allows, in case the product is returned, any removal or substitution of its parts to be detected.

In one embodiment, the warranty procedure comprises a further step of applying a label to the product, invisible to the human eye and detectable only through special detection equipment. This makes it even more difficult for the buyer to tamper with the product without being detected.

In one embodiment, the product is controlled by surveillance cameras during its entire time at the intermediary's premises. Therefore, not only are both the seller and the buyer protected from each other; the two parties are also protected from the operators of the intermediary who have full access to the product being sold at all the steps during the time it is at the premises of the same intermediary, from its arrival at the warehouse, storage, inspection, and finally labeling and shipping to the buyer.

In one embodiment, before delivering the product to the buyer, the intermediary affixes on the packaging of the product a delivery tracking code suitable to allow the buyer to carry out the tracking of the product during the product's delivery.

Moreover, in one embodiment, before the product is transferred from the seller to the intermediary, the intermediary or the same seller affixes on the product packaging a shipping tracking code suitable to permit the buyer and/or the seller to track the product during shipment from the seller to the intermediary.

Furthermore, in one embodiment, the intermediary affixes on the packaging of the product coming from the seller an intermediary tracking code suitable to allow the intermediary to track the product during its time at the premises of the intermediary.

An example of practical implementation of the method illustrated above will now be described in general terms.

The buyer, visiting e-commerce websites, identifies a product of interest. The buyer then accesses the intermediary's site and registers. In addition to the buyer's data, the buyer provides a description of the object and, in a preferred embodiment, the seller's references, for example e-mail address and/or telephone number. For example, the intermediary's website may provide a special form for registration, the description of the object and the seller's data.

The seller's references are used by the intermediary to send to the seller, for example automatically, an invitation to register on the website of the intermediary.

For example, on this invitation it is indicated that a customer is interested in the product and wants to purchase the item through the secure payment system provided by the intermediary.

If the seller accepts the invitation, he/she is directed to the registration page to register on the intermediary's website. In one embodiment, once the registration step of the two parties has been completed, the intermediary is informed of the start of a new transaction and the communication history between buyer and seller is provided.

In one embodiment, when a new user has registered on the intermediary website, a barcode is automatically assigned thereto for the recognition and protection of personal data.

At this point the buyer may make the payment by bank transfer and/or virtual POS addressed to a specific account, using the data indicated by the intermediary.

Preferably, the incoming and outgoing payments from the intermediary's account take place within the framework of a secure payment service operated by an authorized payment institution.

As soon as the payment is made, the buyer sends a notice to the intermediary concerning the payment that has occurred. The intermediary checks within the following days that the payment has been received.

Once the amount has been credited to the intermediary's bank account, the same sends a certificate to the seller, documenting the deposit.

Subsequently, a label to be printed is sent to the seller indicating the shipping address of the product, i.e., the address of the intermediary's operating office, to be affixed to the packaging containing the product to be shipped.

The intermediary then authorizes the courier to collect the product. Place, date and time of collection of the product at the seller's premises will be agreed directly between the latter and the courier.

Upon arrival of the product at the intermediary's operational headquarters, the courier unloads the products to a particular area of the goods receipt warehouse, indicated with ground markings and video surveillance from every angle. An employee picks up the merchandise and the package containing the product is immediately recorded, e.g., by means of a bar code, confirming the acceptance of the product by the intermediary.

At this point the person in charge takes the product to a control area, preferably video-monitored 24 hours a day.

The warranty procedure of the merchandise thus begins.

In a first step, the employee must visually confirm that the product matches the seller's actual description. If the product is in conformity, the employee places one or more warranty seals (unique by serial number), which are affixed at points such that, if someone tried to tamper with the goods, such seals would be compromised.

In a second step, additional distinctive signs are affixed to the product, not visible to the naked eye, but rather by means of special equipment.

For example, these distinctive signs may be made either of a transparent film (so as not to be detectable to the naked eye) or by depositing a transparent ink directly onto the product. For example, the film or ink may be made of a material which, after application, dries or hardens in such a way that, if subjected to stress, the film or ink would be irreparably damaged and may no longer be restored to the original form thereof.

The film or ink is deposited over one or more joining lines between the parts that make up the product, or over the assembly screws, if any, of the product's parts. In this way, if the product is tampered with by disassembling it, the film or the ink will be damaged and their alteration, for example, detectable with special equipment, will be evidence of tampering with the product.

In a third step, as a further verification, the product is weighed without packaging to certify its specific weight, which may be checked in the case of tampering, replacement and/or return.

In a fourth step, the product is packaged in a box provided by the intermediary and closed with a special tamper-proof tape.

In this case, unlike the seals mentioned above directly affixed to the checked product, the special tape affixed to the packaging ensures to the buyer the integrity of the package from tampering by the courier (or by the employees thereof) or, in general, third parties.

All the steps, from arrival to delivery of the product to the courier for shipping to the buyer, are monitored 24 hours a day with high resolution cameras.

At the end of the warranty procedure, and if such procedure has had a positive outcome, a label is created showing the address of the recipient, communicated by the buyer.

Upon arrival of the courier to take charge of the product and make the delivery, which should be carried out in a special video surveillance area delimited by ground markings, a final registration of the product is performed, for example by bar-code.

The system of cataloging the product described above implements, in addition to the management of the intermediary and the security of the internal procedure thereof, the system of live tracking of the product that will be made available to both the buyer and the seller (for example, both by means of the website and by the use of a specially provided smartphone application).

During the package's journey, either of collection by the seller or of delivery to the buyer, both parties can verify the tracking of the merchandise.

When the buyer collects the package and verifies its integrity, the seals affixed by the intermediary on the product's package may be removed to access the product purchased and verify its operation and the correspondence of what was declared by the seller.

Within a period of time established by the delivery, the buyer has the possibility to communicate to the intermediary a possible claim of non-conformity of the product. In any case, the buyer has the obligation not to tamper with the warranty seals affixed to the product.

After such pre-established period of time, and in the absence of objections and/or requests for returns, the intermediary makes the payment to the seller.

It should be noted that, from that moment on, the buyer, if desired or necessary for the correct operation of the purchased item, is free to remove the warranty seals.

The invention also relates to a system configured to implement the method described above.

The system for guaranteeing a sales transaction of a product sold online comprises hardware and software means configured to:
- enable the buyer to register on the website of an intermediary appointed to guarantee the sales transaction;
- enable the seller to register on the website of the intermediary;
- enable the buyer to enter data identifying the product to be purchased on the website of the intermediary;
- allow the buyer to make the payment of the product to a bank account managed by the intermediary, for example, through a partner payment institution of the same intermediary;
- enable the intermediary, once the amount paid by the buyer has been credited, to send a payment certificate to the seller;
- enable both a physical inspection of the product and an inspection by means of video cameras to ensure that the product corresponds to the data supplied by the buyer;
- affix to the product at least one warranty seal, said seal being placed in a position such that tampering with the product causes irreversible damage to the warranty seal.

In one embodiment, the hardware and software means comprise weighing means of the product without packaging.

In one embodiment, the hardware and software means comprise means of applying to the product a label invisible to the human eye and detectable only through special detection equipment.

For example, the hardware and software means are suitable for affixing to the product a transparent film (so as not to be detectable with the naked eye) or directly depositing a transparent ink, the film and ink preferably being made of a material which, after application, dries or hardens in such a way that, if it is subjected to stress, is irreparably damaged and cannot be restored to its original form.

To the embodiments of the method and system according to the invention, those skilled in the art may, to satisfy contingent needs, make modifications, adaptations and substitutions of elements with others that are functionally equivalent, without departing from the scope of the following claims. Each of the features described as belonging to a possible embodiment may be implemented independently by the other embodiments described.

## Claims

1. Method for guaranteeing a sales transaction of a product sold online, wherein:
a) the buyer registers on the website of an intermediary appointed to guarantee the sales transaction;
b) the seller registers on the website of the intermediary;
c) the buyer enters data identifying the product to be purchased on the website of the intermediary;
d) the buyer makes the payment for the product to a bank account managed by the intermediary;
e) the intermediary, once the amount paid by the buyer has been credited, sends a payment certificate to the seller;
f) the product is transferred from the seller to the intermediary;
g) the product undergoes a warranty procedure comprising:
- a physical inspection of the product to ensure that it corresponds to the data supplied by the buyer;
- affixing on the product at least one warranty seal, said seal being placed in a position such that tampering with the product causes irreversible damage to the warranty seal;
h) the product is transferred from the intermediary to the buyer;
i) if there are no objections within a predetermined period of time, the intermediary pays the seller for the product.

2. Method according to the preceding claim, wherein the warranty procedure comprises a further step of weighing the product without packing.

3. Method according to claim 1 or 2, where the warranty procedure comprises a further step of applying a label to the product, invisible to the human eye and detectable only through special detection equipment.

4. Method according to any one of the preceding claims, wherein the warranty procedure comprises a further step of applying over joining lines of product parts and/or assembly screws of product parts a transparent film or a transparent ink, the film and the ink being made of a material which, after application, dries or hardens in such a way that if subjected to a stress is irreparably damaged and may no longer be restored in its original form.

5. Method according to any of the preceding claims, wherein the physical inspection of the product is performed by means of cameras.

6. Method according to any of the preceding claims, wherein the product is subject to control by surveillance cameras throughout its time at the intermediary's premises.

7. Method according to any of the preceding claims, wherein, before the step h), the intermediary affixes a tracking code on the packaging of the product suitable to allow the buyer to track the product during its delivery.

8. Method according to any of the preceding claims, wherein, before step f) the intermediary or the seller affixes on the product packaging a shipping tracking code suitable to permit the buyer and/or the seller to track the product during shipment of the product from the seller to the intermediary.

9. Method according to any of the preceding claims, wherein the intermediary affixes on the packaging of the product coming from the seller an intermediary tracking code suitable to allow the intermediary to track the product during its time at the premises of the intermediary.

10. Method according to any of the preceding claims, wherein the buyer provides the intermediary with the seller's references needed to enable the intermediary to send the seller an invitation to register on the intermediary's site.

11. System for guaranteeing a sales transaction of a product sold online, comprising hardware and software means configured to:
- enable the buyer to register on the website of an intermediary appointed to guarantee the sales transaction;
- enable the seller to register on the website of the intermediary;
- enable the buyer to enter data identifying the product to be purchased on the website of the intermediary;
- enable the buyer to make the payment for the product to a bank account managed by the intermediary;
- enable the intermediary, once the amount paid by the buyer has been credited, to send a payment certificate to the seller;
- enable a physical inspection of the product to ensure that it corresponds to the data supplied by the buyer;
- affix on the product at least one warranty seal, said seal being placed in a position such that tampering with the product causes irreversible damage to the warranty seal.

12. System according to the preceding claim, wherein said hardware and software means comprise weighing means of the product without packaging.

13. System according to claim 11 or 12, wherein said hardware and software means comprise cameras suitable to carry out a visual inspection of the product.

14. System according to any of the claims 11-13, wherein said hardware and software means comprise means of applying to the product a label invisible to the human eye and detectable only through special detection equipment.

15. System according to any of the claims 11-14, wherein said hardware and software means comprise means of application suitable to apply over joining lines of product parts and/or assembly screws of product parts a transparent film or a transparent ink, the film and the ink being made of a material which, after application, dries or hardens in such a way that if subjected to a stress is irreparably damaged and may no longer be restored in its original form.
